# EUROPEAN PATENT SPECIFICATION

(11) **EP 2 906 497 B1**
(45) Date of publication and mention of the grant of the patent: **08.02.2017**
(21) Application number: 13791742.3
(22) Date of filing: 11.10.2013
(51) Int. Cl.: B67C 3/22

(54) **CARBON DIOXIDE DOSING APPARATUS**
KOHLENDIOXIDDOSIERVORRICHTUNG
APPAREIL DE DOSAGE DE DIOXYDE DE CARBONE

(30) Priority: 15.10.2012 EP 12188571
(43) Date of publication of application: 19.08.2015
(73) Proprietor: V.B.S., 1480 Tubize (BE)
(72) Inventor: LIMPENS, Bart, B-1480 Tubize (BE); BUYS, Thomas, B-1480 Tubize (BE)
(74) Representative: Gevers Patents
(86) International application number: PCT/EP2013/071329
(87) International publication number: WO 2014/060320

(56) References cited:
- EP-A1- 1 106 510
- EP-A1- 1 609 721

## Description

The invention relates to a solid carbon dioxide dosing apparatus according to the preamble of the first claim. The invention has applications in the food processing industry, in particular in the processing of beverages. The solid dioxide dosing apparatus finds for example also applications in the fields of refrigeration, pressurizing, isolation, and carbonization but is not limited to these examples.

It is known that foods and beverages are particularly sensitive to the presence of oxygen in the gaseous form, usually the oxygen present in the atmosphere. Oxygen may, inter alia, dissolve in the beverages and react with one or more constituents, and cause for example, undesirable changes in taste, flavor or color. This is a problem for example in the beverage industry, more in particular in the production of wine, beer or soft drinks, where the presence of a small amount of dissolved oxygen may result in a significant deterioration of the quality of the beverage. It is therefore important to reduce the presence of oxygen during the production of beverages to a minimum.

In the beverage industry, generally a relatively inexpensive inert gas such as for example carbon dioxide is used. Because the density of carbon dioxide at room temperature and atmospheric pressure is about 50% larger than that of air under the same conditions, the carbon dioxide displaces the air and appears as a layer above the liquid surface and protects the beverage against the contact with the oxygen. Therefore, during the bottling process, for example, a quantity of carbon dioxide may be inserted in the bottle.

EP 1609721 A1 discloses a solid carbon dioxide dosing apparatus in accordance with the preamble of claim 1. The described solid carbon dioxide dispenser is known for minimizing the contact of foods and beverages with, in particular, atmospheric oxygen by dispensing carbon dioxide in the head space of a fluid-filled container. The dispenser comprises a supply for receiving liquid carbon dioxide expanding to a mixture of solid and gaseous carbon dioxide, a discharge and a winding portion between the supply and the discharge, with the winding portion being provided to reduce the velocity of the solid carbon dioxide as it moves through the winding portion and to separate the solid from the gaseous carbon dioxide. The gaseous carbon dioxide is removed in the winding portion. The decelerated solid carbon dioxide is then delivered to the headspace of a container. The solid carbon dioxide sublimes into the container and the resulting carbon dioxide gas forms a layer above the liquid surface. The disadvantage of this device is that the solid carbon dioxide is not easy to dose and for example is only able to provide relatively incompact quantities of solid carbon dioxide, by means of this device. In a typical automated bottling machine a precise solid carbon dioxide dose of sufficient mass should be delivered at intervals of 50 to 60 ms to the head space of a bottle of approximately 18 mm in diameter where the head space of the bottle resides only for 15 to 20 ms underneath the doser. The solid carbon dioxide exits the device in some cases with too low a speed and hence too wide a spread or too low a mass to be profitable in the context of an automated bottling machine.

The invention aims to provide a dosing apparatus with an improved dosing.

Thereto, the invention provides a carbon dioxide dosing apparatus with a solid matter collector comprising at least two ends and being connected in such a way to the separator that the separated solid carbon dioxide is collected in the solid matter collector, with the one end of the solid matter collector connected to a solid matter supply control and the other end of the solids collector connected to a dosing valve for dosing the solid carbon dioxide.

Oxygen may, inter alia, dissolve in beverages and react with one or more constituents, and cause for example, undesirable changes in taste, flavor or color. This is a problem for example in the beverage industry where the presence of a small amount of dissolved oxygen may result in a significant deterioration of the quality of the beverage. It is therefore important to reduce the presence of oxygen during the production of beverages to a minimum. Generally a relatively inexpensive inert gas such as for example carbon dioxide is used. Because the density of carbon dioxide at room temperature and atmospheric pressure is about 50% larger than that of air under the same conditions, the carbon dioxide displaces the air and protects the beverage against the contact with the oxygen. Therefore, during the bottling process, for example, a quantity of carbon dioxide may be inserted in the bottle.

The carbon dioxide dosing apparatus according to the invention makes it possible to dispense solid carbon dioxide in a controlled manner with great precision both in space and time. It is therefore possible to create a compact dosing with an adjustable weight which exits the apparatus with a variable velocity. Liquid carbon dioxide under pressure expanding to a mixture of solid and gaseous carbon dioxide is supplied to the apparatus and is first separated as a result of the solid carbon dioxide being pressed in the separator by the centrifugal force against an outer wall of the separator, while the gaseous carbon dioxide which is less dense is pressed against an inner wall of the separator. The separated gaseous carbon dioxide may then be discharged through the gas discharge in a controlled manner and will not necessary accumulate in the vicinity of the dosing apparatus and possibly cause discomfort. The carbon dioxide collected in the solid matter collector thus contains primarily solid carbon dioxide. By means of the solid matter supply control at the one end of the solid matter collector and the dosing valve at the other end, both the speed and the frequency with which the solid carbon dioxide from the solid matter collector is dosed, can be controlled by providing a controllable driving force for expelling the solid matter from the apparatus through the dosing valve.

Preferably, the solid matter supply control is a controllable gas supply.

Setting both the moment at which the gas is supplied and the duration of the supply, will provide a certain amount of gas at a certain pressure and this gas under pressure will, at the moment when the dosing valve is open, form the driving force, for expelling the solid carbon dioxide, for example by blowing the solid carbon dioxide out off the solid matter collector by entrainment of the solid carbon dioxide when gas is flowing out off the controllable gas supply past the solid carbon dioxide and through the dosing valve or by blowing the solid carbon dioxide out off the solid matter collector after building up pressure in the solid matter collector by supplying gas into it and suddenly opening the dosing valve. The first embodiment wherein the dosing valve is opened and gas is allowed in through the adjustable gas supply in the solid matter collector so that the solid carbon dioxide exits the apparatus through the dosing valve as it is entrained by the gas in the solid matter collector is preferred as a pressure build up requires for example the gas discharge and vent to be sealed after reception of the solid carbon dioxide.

Preferably, a vent is present in the separator between the supply and the solid matter collector for allowing the discharge of gaseous carbon dioxide.

The presence of such a vent avoids that gaseous carbon dioxide accumulates in the solid matter collector, which may cause the recoil of the solid carbon dioxide dose.

Preferably, the supply is a supply tube, the separator is tubular, the gas discharge is a gas discharge tube, and the solids collector is tubular.

Within the scope of this invention, it is possible that the supply is a supply tube, but that one or more of the separator, the gas discharge, and the solid matter collector is not tubular. Within the scope of this invention, it is possible that the separator is tubular, but that one or more of the supply, the gas discharge, and the solids matter collector is not tubular. Within the scope of this invention, it is possible that the gas discharge tubular, but that one or more of the supply, the separator and the solid matter collector is not tubular. Within the scope of this invention, it is equally possible that the solid matter collector is tubular, but that one or more of the supply, the separator and the gas discharge is not tubular.

Preferably, the gas supply is controlled by means of a, preferably, regulated gas supply valve.

The gas supply of the dosing apparatus may be equipped with a gas supply valve, for example, to be able to control the velocity at which the solid carbon dioxide is moving through the solid material collector and/or is dispelled out of the dosing apparatus, by means of the gas supply. The gas supplied is preferably a relatively inert gas, such as for example carbon dioxide.

Preferably, the supply of the mixture of solid and gaseous carbon dioxide under pressure is controlled by means of a pre-dosing valve.

The pre-dosing valve allows for a precise dosing of the amount of carbon dioxide. Liquid carbon dioxide at a certain temperature and pressure, available for example from a pressurized reservoir, enters the dosing apparatus through the pre-dosing valve and expands to atmospheric pressure to a mixture of solid and gaseous carbon dioxide. The mixture of the solid and gaseous carbon dioxide is separated and the separated solid carbon dioxide is subsequently collected in the solid matter collected and ready to be dosed to a container.

Preferably, the valves are controlled by means of a control panel. The control of the valves by means of a control panel allows aligning the opening and closing of the various valves to each other, in function of the amount of solid carbon dioxide per unit of time there is to be dosed, and the period during which each dosage should correspond. The opening and closing of the various valves may for example be changed as a function of the temperature and pressure of the liquid carbon dioxide under pressure which is supplied in order to ensure that a certain amount of solid carbon dioxide is dispensed per unit of time, and that a specific dose is delivered at the output of the dosing valve.

Preferably, the solid carbon dioxide dosing apparatus comprises a conditioning tank wherein the liquid carbon dioxide, supplied to the pre-dosing valve, is sub-cooled.

The conditioning tank ensures that liquid carbon dioxide under very controlled temperature conditions is supplied and which may be optimized to obtain a maximum output of solid carbon dioxide at the dosing valve. The option to precisely control and stabilize the initial conditions of the liquid carbon dioxide at the supply also ensures that the same amount of solid carbon dioxide may be obtained at the dosing valve. The main purpose of the conditioning tank is to sub-cool the liquid carbon dioxide, for example when it is flowing through a heat exchanger in the conditioning tank to make sure that the liquid carbon dioxide is well below the vapour/liquid equilibrium line in a PT diagram at a certain given pressure.

Preferably, the separator and the solid matter collector are submerged into liquid carbon dioxide inside the conditioning tank.

As a result, the separator and the solid matter collector are kept at thermal equilibrium inside the conditioning tank and do not experience a temperature gradient. This arrangement contributes to ensure that the same amount of solid carbon dioxide is supplied at every dosage by not losing solid carbon dioxide for cooling down the walls of the separator/collector after a stop.

Preferably a bottling machine comprises the solid carbon dioxide dosing apparatus according to the invention.

The solid carbon dioxide dosing is preferably inserted into a bottling machine for filling beverage containers in automatic mode. The dosing apparatus is provided to supply solid carbon dioxide in the head space of the container, wherein the timing of the dosing apparatus is preferably tuned to the frequency and/or speed with which the containers are moved through the bottling machine, for example on a conveyor belt. The solid carbon dioxide supplied in the head space of the container comes into contact with the beverage and sublimates, forming gaseous carbon dioxide which expels the air from the headspace of the container. The solid carbon dioxide may also be supplied in an empty container and likewise the solid carbon dioxide will sublimate in the container and expel the air. The cold, dense carbon dioxide ensures that little or no air returns into the container before the container is closed with a closing means. Preferably, the container is closed with a closing means before the solid carbon dioxide has sublimed completely, in order to ensure that gaseous carbon dioxide is still being formed and avoid that air reenters the container. It is for example also possible to close the container with a closing means which allows gaseous carbon dioxide to leave the container but prevent air from entering the container and at a later stage tighten the closing means to prevent gaseous carbon dioxide to leave the container.

The invention also provides the use of the solid carbon dioxide dosing apparatus.

Preferably, the use of the solid carbon dioxide dosing apparatus comprises the bottling of containers.

In the beverage industry in the production of wine, beer or soft drinks, in which the presence of a small amount of dissolved oxygen can result in a significant deterioration in the quality of the beverage, it is important to reduce the presence of oxygen during the bottling of beverages to a minimum. The solid carbon dioxide dosing device according to the invention allows the presence of oxygen in the bottle to be minimized as a result of the fact that the solid carbon dioxide in the head space of the bottle is brought into contact with the beverage and sublimates, so that gaseous carbon dioxide is formed and expels the air from the headspace of the bottle, after or during which a closing means may be applied on the head of the cylinder which would much reduce the influx of air into the bottle. Such closing means are for example cork closures, threaded closures such as external threaded screw caps, stoppers, non-threaded metal caps, crown caps etc

Preferably, the use of the solid carbon dioxide dosing apparatus according to the invention comprises the bottling of wine bottles.

The taste of wine is the result of a delicate balancing of several components. It may therefore be of particular importance to avoid that oxygen dissolves in the wine and reacts for example with one or more components, causing undesirable changes in taste, flavor or color. The use of the dosing device according to the invention during the bottling of wine bottles may greatly reduce the likelihood of such undesirable changes and safeguard the quality of the wine.

Preferably, the use of the solid carbon dioxide dosing apparatus according to the invention comprises the bottling of beer bottles.

The inventors have found that it is possible to replace the high pressure water jet, used when bottling beer, by delivering solid carbon dioxide in the headspace. As a beer bottle leaves the filler, very often right before closing, a high pressure thin jet of water is injected into the bottle. Due to the impact the carbon dioxide dissolved in the beer comes out of the solution and creates foam. To obtain low dissolved oxygen values, the foam needs not only to fill up the entire headspace, but requires over-foaming which is often not liked by the brewers because of beer spilling, the risk of fungus growth, the requirement to wash the bottles and to dry them before they arrive at the labeler and is moreover less applicable with beers having lower carbon dioxide contents. The invention aims to avoid this over-foaming requirement by replacing the water-jet and delivering solid carbon dioxide in the headspace.

The solid dioxide dosing apparatus finds for example also applications in the fields of refrigeration, pressurizing, isolation, and carbonization but is not limited to these examples. The use of the apparatus is not limited to wine and beer but comprises also for example juices, water and the like.

The invention will now be further described with reference to an exemplary embodiment shown in the figures.
Figure 1 shows a schematic view of a solid carbon dioxide dosing apparatus according to a preferred embodiment of the invention.
Figure 2 shows a schematic view of a preferred embodiment of the solid carbon dioxide dosing apparatus according to the invention.
Figure 3 shows a schematic view of a solid carbon dioxide dosing apparatus according to a preferred embodiment of the invention.

In the drawings one and the same reference numerals are assigned to the same or analogous element.

The present invention will be described with respect to particular embodiments and with respect to certain figures, but the description is not limited thereto but only by the claims. The described figures are only schematic and are not restrictive. In the figures, the size of some elements may be exaggerated and not drawn on scale for illustrative purposes only. The dimensions and relative dimensions do not necessarily correspond to real achievements of the invention.

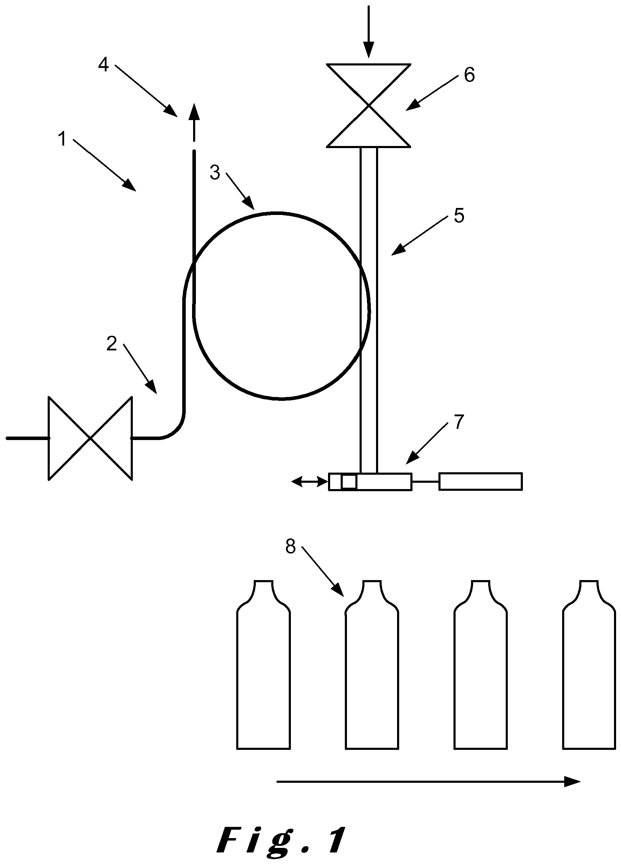

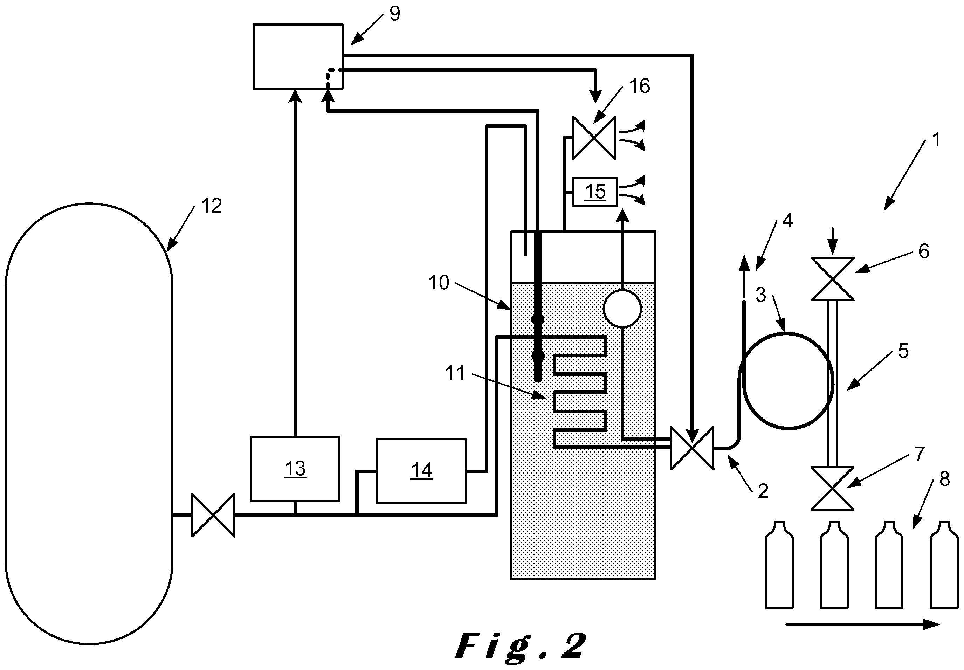

Figure 1 shows a preferred embodiment of the solid carbon dioxide dosing apparatus 1 for the controlled dispensing of a quantity of solid carbon dioxide, wherein a quantity liquid carbon dioxide at a certain temperature under a certain pressure is supplied through the pre-dosing valve 2. Upon entering the dosing apparatus 1, the liquid carbon dioxide under pressure expands under atmospheric pressure to a mixture of solid and gaseous carbon dioxide. Figure 2 illustrates how the liquid carbon dioxide is brought under the desired temperature and pressure conditions. Liquid carbon dioxide is widely commercially available and stored in a storage tank 12, typically at a pressure of 10 to 25 bar and at a temperature of -40 to -10°C. The storage tank 12 is connected to the dosing apparatus 1 via a conditioning tank 10 by tubing. The storage tank 12, the conditioning tank 10 and the tubing are made from materials, capable of resisting to the high pressure and low temperature conditions usually prevailing when handling liquid carbon dioxide. The tubing may be rigid or flexible, as long as it is not permeable for carbon dioxide. The flow of the liquid carbon dioxide may be controlled by one or more valves and the pressure and temperature of the liquid monitored by one or more manometers 13 and thermocouples, respectively. The conditioning tank 10 is provided to bring the liquid carbon dioxide at the desired temperature, typically at a temperature of -40 to -55°C The tubing connecting the storage tank 12 to the dosing apparatus 1 via the conditioning tank 10 comprises preferably a heat exchanger 11 in the conditioning tank 10 for bringing the liquid carbon dioxide present in the tubing in a sub-cooled state, by bringing the liquid carbon dioxide present in the tubing at the temperature prevailing in the conditioning tank 10. The temperature and pressure may for example be monitored using one or more manometers 13 and thermocouples. The pressure may be regulated using one or more pressure regulators 14. The conditioning tank 10 is connected to the pre-dosing valve 2. The valves controlling the flow of the liquid carbon dioxide may be controlled by a control panel 9, using for example the temperature and pressure values supplied by the one or more manometers 13 and thermocouples. Speed and possibly encoder signals may be used to synchronize the dose with the bottle passage. Preferably, the one or more manometers 13 and thermocouples are also connected to the control panel 9.

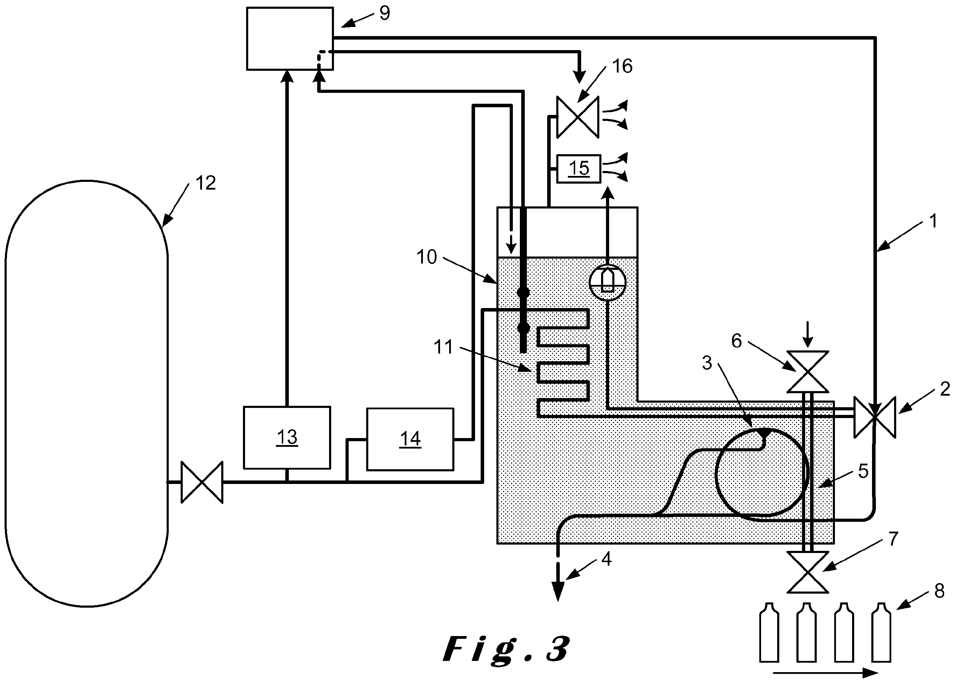

The pre-dosing valve 2, as shown in Figures 1, 2 and 3 controlled by control panel 9 is connected to the separator 3. The separator 3 has at least a portion having a radius and angle of curvature which is sufficient for solid carbon dioxide to separate in a two-phase gas-solid mixture from gaseous carbon dioxide under the influence of centrifugal force. In practice, the separator 3 has typically a radius of curvature of 90-120 mm. The angle of curvature may be around 270°, an angle of around 180° is however also possible, as well as any intermediate value. It is, however, also possible to have an angle of 360° or even more. A gas discharge 4 is connected to the separator 3 for discharging the separated gaseous carbon dioxide. The gas discharge 4 may be tubular or take the shape of a vent as disclosed in EP 1 609 721 B1. The pre-dosing valve 2, the separator 3 and the gas discharge 4 usually have a tubular shape and a diameter ranging from 5 to 25 mm. The walls of the pre-dosing valve 2 and the separator 3 as well as any other tubing contacting the solid carbon dioxide preferably are smooth walls in order to avoid that the solid carbon dioxide sticks to the walls and possibly obstructs the flow of the carbon dioxide.

In a preferred embodiment, the separator 3 and the solid matter collector 5 are submerged in the conditioning tank 10. As a result, the separator 3 and the solid matter collector 5 are kept at thermal equilibrium inside the conditioning tank 10 and do not experience a temperature gradient. This arrangement contributes to ensure that the same amount of solid carbon dioxide is supplied at every dosage. The conditioning tank 10 is filled with liquid carbon dioxide which is kept at a pre-set temperature. Excess gaseous carbon dioxide is for example, removed from the tank to keep the pressure inside the tank at a desired value by for example the pressure reducer 15, optionally in combination with valve 16. The volume of the liquid carbon dioxide is kept at a desired level by allowing liquid carbon dioxide from the storage tank 12 to fill the conditioning tank 10, for example through a valve, to compensate for the amount of liquid carbon dioxide vaporized from the conditioning tank 10 used for cooling of the liquid carbon dioxide in the heat exchanger and keeping the dosing apparatus at thermal equilibrium.

A solid matter collector 5 is connected to the separator 3 in such a way that the separated solid carbon dioxide is collected in the solid matter collector 5. In figure 1 and 2 the solid matter collector 5 extends in a substantially longitudinal direction. The solid matter collector 5 comprises at least two ends, with one end connected to a controllable gas supply 6 and with the other end connected to a dosing valve 7 for dosing the solid carbon dioxide. For most usual applications, the solid matter collector 5 typically has a tubular shape and a diameter ranging between 5 and 25 mm. More than one solid matter collector 5 could be present in the apparatus 1, in order to be able to fill more than one container 8 at a time on linear fillers. Alternatively, in case of rotary fillers (continuous running) instead of linear fillers, the dosing heads would not fire simultaneously. When the first bottle is being dosed from the first dosing head, the second dose is prepared in the second collector tube while the second dosing valve is closed for when the next bottle comes underneath the second dosing head and visa versa. The controllable gas supply 6 may be controlled using a gas valve and the pressure of the gas may be controlled using pressure control means. The dosing valve 7 is made from any material considered suitable by the person skilled in the art. For highly automated dosing systems, the open and closing cadence of the dosing valve 7 is in the order of magnitude of milliseconds and this requires the use of a highly reliable and robust dosing valve 7. In this case a pneumatically driven ceramic sliding disc dosing valve 7 is preferred. It is also possible to use as a dosing valve 7 a rotating disc valve provided with an opening to allow for the controlled opening and closing of the valve 7 by rotating the disc. This valve 7 is preferred when for example more than one solid matter collector 5 is used in the dosing apparatus 1. Pinch valves or other rotary type valves are possible; in fact any valve that would allow for a 100% free straight through passage of the solid is possible. The materials for the pre-dosing valve 2, the separator 3, the gas discharge 4 and the solid matter collector 5 are chosen such that they are capable of resisting to the high pressure and low temperature conditions usually prevailing when handling liquid carbon dioxide. Suitable materials are for example stainless steel alloys, composite materials or combinations thereof.

In a practical implementation of the invention, an amount of liquid carbon dioxide typically at a pressure of 10 to 25 bar and at a temperature of - 40 to -10°C, present in the storage tank 12 transfers to the conditioning tank 10 and the heat exchanger if present through a tubing system comprising for example one or more valves for controlling the amount and/or pressure of liquid carbon dioxide flowing through the tubing. The liquid carbon dioxide enters the conditioning tank 10 and is brought at the desired temperature/pressure using a controlled means of pressure relief and electronic level control. It is preferred that the liquid carbon dioxide travelling in the heat exchanger 11 is sub-cooled, i.e. brought to a temperature lower than the temperature prevailing in the storage tank 12, in order to make sure that the carbon dioxide supplied to the pre-dosing valve 2 is in the liquid state and not present as a mixture between gaseous and liquid carbon dioxide. The conditioning tank/heat exchanger will accomplish this. The amount of liquid carbon dioxide passing from the storage tank 12 to the pre-dosing valve 2 per unit of time is depending on the storage tank pressure. Under lower pressure less liquid carbon dioxide will flow through the pre-dosing valve and more opening time of the valve will be necessary if the same amount of liquid carbon dioxide is desired. Since the amount of solid carbon dioxide obtained is quite sensitive to the temperature and pressure conditions in the conditioning tank 10, it is advisable to keep the conditions stable prevailing in the conditioning tank 10 in order to limit thermal fluctuations in the sub cooled liquid. Thermal fluctuations, for example due to the environment may also limited by keeping the apparatus well insulated for example by foam, vacuum, nanogel, ...

Depending on the pressure, temperature of the subcooled liquid and the desired amount of liquid carbon dioxide per dose, the pre-dosing valve is opened for a certain amount of time and then closed. The opening and closing of the pre-dosing valve may be controlled by the control panel 9, for example on the basis of the data received from a manometer, in order to ensure that for every opening and closing of the valve the same amount of liquid carbon dioxide is provided. The sub-cooled liquid carbon dioxide under high pressure expands in the pre-dosing valve 2 to a mixture of solid and gaseous carbon dioxide at atmospheric pressure. Driven by the expansion of the carbon dioxide, the solid and gas mixture travels to the separator 3. In the separator 3, a mixture of solid and gaseous carbon dioxide is separated as a result of the solid carbon dioxide being pressed in the separator 3 by the centrifugal force against an outer wall of the separator 3, while the gaseous carbon dioxide which is less dense is pressed against an inner wall of the separator 3. The separated gaseous carbon dioxide may then be discharged through the gas discharge 4 in a controlled manner and the separated solid carbon dioxide is collected in the solid matter collector 5. The dosing valve 7 is opened and after a short delay, typically in the order of magnitude of milliseconds, gas is supplied through the controllable gas supply 6, for example by opening a gas valve and allowing an amount of gas at a certain pressure into the solid matter collector 5. Under impulse of the gas, a dose of solid carbon dioxide is expelled from the solid matter collector 5 through the dosing valve 7; for example into the headspace of a container 8. After dosing, the dosing valve 7 is closed and the gas supply 6 shut off, for example by closing the gas valve. The container 8 is usually placed on a carrier band and moves further on the carrier band after receiving the dose of solid carbon dioxide, while a new container 8 is moved to the position right below the dosing valve 7. The dosing apparatus is now ready for providing a new dose of solid carbon dioxide to the container. A new dose is made available by opening the pre-dosing valve and following the procedure described above.

The dosing apparatus according to the invention is particularly suited for operating as a part of a highly automated bottling machine. In such bottling machines 30000 to 75000 bottles are to be filled per hour and considering a bottle neck opening of about 20 mm in diameter, it leaves only a few milliseconds for the dosing apparatus to fill the headspace of the bottle with a solid carbon dioxide dose The dosing apparatus according to the invention manages to provide a very precise, compact dose of solid carbon dioxide within the tight time constraints set by a highly automated bottling machine.

## Claims

1. Solid carbon dioxide dosing apparatus (1) for the controlled dosing of a quantity of solid carbon dioxide, comprising
- a supply (2), through which liquid carbon dioxide under pressure expanding to a mixture of solid and gaseous carbon dioxide is supplied,
- a separator (3) connected to the supply (2) for the separation of the solid and gaseous carbon dioxide of which at least a portion has a radius and angle of curvature which is sufficient for the solid carbon dioxide to separate from the gaseous carbon dioxide under the influence of centrifugal force,
- a gas discharge (4) connected to the separator (3) for discharging the separated gaseous carbon dioxide,
**characterized in that** the solid carbon dioxide dosing apparatus (1) comprises a solid matter collector (5) comprising at least two ends and connected in such a way to the separator (3) that the separated solid carbon dioxide is collected in the solid matter collector (5), with one end of the solid matter collector (5) connected to a solid matter supply control (6) and with the other end of the solid matter collector (5) connected to a dosing valve (7) for dosing the solid carbon dioxide.

2. Solid carbon dioxide dosing apparatus (1) according to claim 1, **characterized in that** the solid matter supply control is a controllable gas supply (6).

3. Solid carbon dioxide dosing apparatus (1) according to any one of the preceding claims, **characterized in that** a vent is present in the separator (3) between the supply (2) and the solid matter collector (5) for allowing additional discharge of gaseous carbon dioxide.

4. Solid carbon dioxide dosing apparatus (1) according to any one of the preceding claims, **characterized in that** the supply (2) is tubular, the separator (3) is tubular, the gas discharge (4) is tubular and the solid matter collector (5) is tubular.

5. Solid carbon dioxide dosing apparatus (1) according to any claim 2, **characterized in that** the gas supply (6) is controlled by means of a gas supply valve (6).

6. Solid carbon dioxide dosing apparatus (1) according to claim 5, **characterized in that** the gas supply valve (6) comprises a gas valve and a pressure regulator.

7. Solid carbon dioxide dosing apparatus (1) according to any one of the preceding claims, **characterized in that** the supply (2) of the liquid carbon dioxide under pressure expanding to the mixture solid and gaseous carbon dioxide is controlled by means of a pre-dosing valve (2).

8. Solid carbon dioxide dosing apparatus (1) according to any one of the preceding claims, **characterized in that** the valves are controlled by means of a control panel (9).

9. Solid carbon dioxide dosing apparatus (1) according to any one of the preceding claims comprising a conditioning tank (10) wherein the liquid carbon dioxide, supplied to the supply (2) is sub-cooled.

10. Solid carbon dioxide dosing apparatus (1) according to claim 9, **characterized in that** the separator (3) and the solid matter collector (5) are submerged into liquid carbon dioxide inside the conditioning tank (10).

11. Automatic filling machine comprising the solid carbon dioxide dosing apparatus (1) according to any one of the preceding claims.

12. Automatic filling machine according to claim 11, **characterized in that** the machine is a bottling machine.

13. Use of the solid carbon dioxide dosing apparatus (1) according to any one of the preceding claims 1-10.

14. Use of the solid carbon dioxide dosing apparatus (1) according to claim 13 for the bottling of containers (8).

15. Use of the solid carbon dioxide dosing apparatus (1) according to claim 14 for the bottling of wine or beer bottles (8).

## Patentansprüche

1. Dosiervorrichtung für festes Kohlendioxid (1) zum kontrollierten Dosieren einer Menge von festem Kohlendioxid, welche Folgendes umfasst:
- eine Zufuhr (2), über die flüssiges Kohlendioxid unter Druck, das zu einer Mischung von festem und gasförmigem Kohlendioxid expandiert, zugeführt wird,
- einen Separator (3) verbunden mit der Zufuhr (2) für die Trennung des festen und gasförmigen Kohlendioxids, von dem zumindest ein Abschnitt einen Radius und Krümmungswinkel hat, welcher ausreicht, damit das feste Kohlendioxid sich unter Einfluss der Zentrifugalkraft vom gasförmigen Kohlendioxid trennt,
- einen Gasablass (4) verbunden mit dem Separator (3) zum Ablassen des getrennten gasförmigen Kohlendioxids,
**dadurch gekennzeichnet, dass** die Dosiervorrichtung für festes Kohlendioxid (1) einen Feststoffsammler (5) umfasst, welcher zumindest zwei Enden umfasst und so an den Separator (3) angeschlossen ist, dass das getrennte feste Kohlendioxid im Feststoffsammler (5) gesammelt wird, wobei ein Ende des Feststoffsammlers (5) mit einem Feststoffzufuhrregler (6) verbunden ist, und wobei das andere Ende des Feststoffsammlers (5) mit einem Dosierventil (7) zum Dosieren des festen Kohlendioxids verbunden ist.

2. Dosiervorrichtung für festes Kohlendioxid (1) nach Anspruch 1, **dadurch gekennzeichnet, dass** der Feststoffzufuhrregler eine regulierbare Gaszufuhr (6) ist.

3. Dosiervorrichtung für festes Kohlendioxid (1) nach irgendeinem der vorigen Ansprüche, **dadurch gekennzeichnet, dass** eine Lüftungsöffnung im Separator (3) zwischen der Zufuhr (2) und dem Feststoffsammler (5) vorhanden ist, über die gasförmiges Kohlendioxid zusätzlich abgelassen werden kann.

4. Dosiervorrichtung für festes Kohlendioxid (1) nach irgendeinem der vorigen Ansprüche, **dadurch gekennzeichnet, dass** die Zufuhr (2) rohrförmig ist, der Separator (3) rohrförmig ist, der Gasablass (4) rohrförmig ist und der Feststoffsammler (5) rohrförmig ist.

5. Dosiervorrichtung für festes Kohlendioxid (1) nach Anspruch 2, **dadurch gekennzeichnet, dass** die Gaszufuhr (6) mittels eines Gaszufuhrventils (6) geregelt wird.

6. Dosiervorrichtung für festes Kohlendioxid (1) nach Anspruch 5, **dadurch gekennzeichnet, dass** das Gaszufuhrventil (6) ein Gasventil und einen Druckregler umfasst.

7. Dosiervorrichtung für festes Kohlendioxid (1) nach irgendeinem der vorigen Ansprüche, **dadurch gekennzeichnet, dass** die Zufuhr (2) des flüssigen Kohlendioxids unter Druck das zur Mischung von festem und gasförmigem Kohlendioxid expandiert, mittels eines Vordosierventils (2) reguliert wird.

8. Dosiervorrichtung für festes Kohlendioxid (1) nach irgendeinem der vorigen Ansprüche, **dadurch gekennzeichnet, dass** die Ventile mithilfe einer Bedientafel (9) kontrolliert werden.

9. Dosiervorrichtung für festes Kohlendioxid (1) nach irgendeinem der vorigen Ansprüche, welche einen Konditionierbehälter (10) umfasst, in dem das flüssige Kohlendioxid, das der Zufuhr (2) zugeführt wird, unterkühlt wird.

10. Dosiervorrichtung für festes Kohlendioxid (1) nach Anspruch 9, **dadurch gekennzeichnet, dass** der Separator (3) und der Feststoffsammler (5) in das flüssige Kohlendioxid innerhalb des Konditionierbehälters (10) eingetaucht sind.

11. Automatische Füllmaschine, die die Dosiervorrichtung für festes Kohlendioxid (1) nach irgendeinem der vorigen Ansprüche umfasst.

12. Automatische Füllmaschine nach Anspruch 11, **dadurch gekennzeichnet, dass** die Maschine eine Flaschenfüllmaschine ist.

13. Verwendung der Dosiervorrichtung für festes Kohlendioxid (1) nach irgendeinem der vorigen Ansprüche 1 bis 10.

14. Verwendung der Dosiervorrichtung für festes Kohlendioxid (1) nach Anspruch 13 zum Abfüllen von Behältnissen (8).

15. Verwendung der Dosiervorrichtung für festes Kohlendioxid (1) nach Anspruch 14 zum Abfüllen von Wein- oder Bierflaschen (8).

## Revendications

1. Appareil de dosage de dioxyde de carbone solide (1) pour le dosage réglé d'une quantité de dioxyde de carbone solide, comprenant :
- une alimentation (2) par laquelle du dioxyde de carbone liquide sous pression se dilatant en un mélange de dioxyde de carbone solide et de dioxyde de carbone gazeux est fournie,
- un séparateur (3) raccordé à l'alimentation (2) pour la séparation du dioxyde de carbone solide et du dioxyde de carbone gazeux, dont au moins une partie a un rayon et un angle de courbure qui suffit pour séparer le dioxyde de carbone solide du dioxyde de carbone gazeux sous l'influence de la force centrifuge,
- une décharge de gaz (4) raccordée au séparateur (3) pour décharger le dioxyde de carbone gazeux séparé,
**caractérisé en ce que** l'appareil de dosage de dioxyde de carbone solide (1) comprend un collecteur de matières solides (5) comprenant au moins deux extrémités et raccordé au séparateur (3) de manière que le dioxyde de carbone solide séparé soit recueilli dans le collecteur de matières solides (5), une extrémité du collecteur de matières solides (5) étant raccordée à une commande d'alimentation en matières solides (6) et l'autre extrémité du collecteur de matières solides (5) étant raccordée à une soupape de dosage (7) pour doser le dioxyde de carbone solide.

2. Appareil de dosage de dioxyde de carbone solide (1) selon la revendication 1, **caractérisé en ce que** la commande d'alimentation en matières solides est une alimentation en gaz réglable (6).

3. Appareil de dosage de dioxyde de carbone solide (1) selon l'une quelconque des revendications précédentes, **caractérisé en ce qu'**une purge est présente dans le séparateur (3) entre l'alimentation (2) et le collecteur de matières solides (5) pour permettre une décharge supplémentaire de dioxyde de carbone gazeux.

4. Appareil de dosage de dioxyde de carbone solide (1) selon l'une quelconque des revendications précédentes, **caractérisé en ce que** l'alimentation (2) est tubulaire, le séparateur (3) est tubulaire, la décharge de gaz (4) est tubulaire et le collecteur de matières solides (5) est tubulaire.

5. Appareil de dosage de dioxyde de carbone solide (1) selon la revendication 2, **caractérisé en ce que** l'alimentation en gaz (6) est réglée au moyen d'une soupape d'alimentation en gaz (6).

6. Appareil de dosage de dioxyde de carbone solide (1) selon la revendication 5, caractérisé en ce la soupape d'alimentation en gaz (6) comprend une soupape à gaz et un régulateur de pression.

7. Appareil de dosage de dioxyde de carbone solide (1) selon l'une quelconque des revendications précédentes, **caractérisé en ce que** l'alimentation (2) du dioxyde de carbone liquide sous pression se dilatant en un mélange de dioxyde de carbone solide et de dioxyde de carbone gazeux est réglée au moyen d'une soupape de pré-dosage (2).

8. Appareil de dosage de dioxyde de carbone solide (1) selon l'une quelconque des revendications précédentes, **caractérisé en ce que** les soupapes sont réglées au moyen d'un panneau de commande (9).

9. Appareil de dosage de dioxyde de carbone solide (1) selon l'une quelconque des revendications précédentes, comprenant un réservoir de conditionnement (10) dans lequel le dioxyde de carbone liquide fourni à l'alimentation (2) est sous-refroidi.

10. Appareil de dosage de dioxyde de carbone solide (1) selon la revendication 9, **caractérisé en ce que** le séparateur (3) et le collecteur de matières solides (5) sont immergés dans du dioxyde de carbone liquide à l'intérieur du réservoir de conditionnement (10).

11. Machine de remplissage automatique comprenant l'appareil de dosage de dioxyde de carbone solide (1) selon l'une quelconque des revendications précédentes.

12. Machine de remplissage automatique selon la revendication 11, **caractérisée en ce que** la machine est une machine d'embouteillage.

13. Utilisation de l'appareil de dosage de dioxyde de carbone solide (1) selon l'une quelconque des revendications 1 à 10.

14. Utilisation de l'appareil de dosage de dioxyde de carbone solide (1) selon la revendication 13 pour l'embouteillage de récipients (8).

15. Utilisation de l'appareil de dosage de dioxyde de carbone solide (1) selon la revendication 14 pour l'embouteillage de bouteilles de vin ou de bière (8).
